# EUROPÄISCHE PATENTSCHRIFT

(11) **EP 3 152 767 B1**
(45) Veröffentlichungstag und Bekanntmachung des Hinweises auf die Patenterteilung: **01.08.2018**
(21) Anmeldenummer: 15726980.4
(22) Anmeldetag: 05.06.2015
(51) Int. Cl.: G21F 9/28, G21F 9/00, B28D 1/18, B28D 1/26, B28D 1/04, G21D 1/00

(54) **VORRICHTUNG UND VERFAHREN ZUM ABTRAGEN VON KONTAMINIERTEM MATERIAL**
DEVICE AND PROCESS FOR ABLATION OF CONTAMINATED MATERIAL
APPAREIL ET PROCÉDÉ POUR DÉBLAYER DE MATÉRIAUX CONTAMINÉS

(30) Priorität: 06.06.2014 DE 102014210947
(43) Veröffentlichungstag der Anmeldung: 12.04.2017
(73) Patentinhaber: EnBW Energie Baden-Württemberg AG, 76131 Karlsruhe (DE)
(72) Erfinder: BOERSCH, Fabian, 74189 Weinsberg (DE); FEIL, Hartmut, 74850 Schefflenz (DE); HESS, Josef, 74855 Hassmersheim (DE); HUSFELDT, Martin, 74821 Mosbach (DE); REUSS, Markus, 50858 Köln (DE); GROSS, Ralf, 74850 Schefflenz (DE); HENTSCHEL, Sebastian, 74076 Heilbronn (DE)
(74) Vertreter: DREISS Patentanwälte PartG mbB
(86) Internationale Anmeldenummer: PCT/EP2015/062604
(87) Internationale Veröffentlichungsnummer: WO 2015/185739

(56) Entgegenhaltungen:
- DE-A1- 3 916 186
- FR-A1- 2 459 716
- GB-A- 2 301 221
- KR-A- 20100 024 796

## Beschreibung

Die vorliegende Erfindung betrifft eine Vorrichtung zum Abtragen von kontaminiertem Material von einer Wand nach dem Oberbegriff des Anspruchs 1. Außerdem ist Teil der Erfindung ein Verfahren zum Abtragen von kontaminiertem Material von einer Wand nach dem Oberbegriff des Anspruchs 11.

Beim Rückbau kerntechnischer Anlagen besitzt die Minimierung kontaminierter Abfälle höchste Priorität. Dies gilt auch für eine effiziente Dekontaminierung von Böden und Wänden von Gebäuden aus Beton, welche die kerntechnische Anlage oder Teile davon vor äußeren Einflüssen schützt. Im Zusammenhang mit der beanspruchten Erfindung ist aus Gründen der sprachlichen Vereinfachung meist nur von einer Wand die Rede; gemeint sind immer aber auch die Böden und Decken von Räumen.

Während des teilweise jahrzehntelangen Betriebs einer kerntechnischen Anlage kann es zu Kontaminationen der inneren Begrenzungsflächen (Wände, Boden und Decke) des die Anlage schützenden Gebäudes kommen. Daher können solche Gebäude erst nach einer Dekontamination auf konventionelle Art und Weise abgerissen werden.

Bei einem solchen Gebäude besteht die Dekontamination darin, die Oberflächen der inneren Begrenzungsflächen (Wände, Boden und Decke) bis zu einer Tiefe von etwa 10 mm abzutragen. Nur das dabei abgetragene Material kann möglicherweise radioaktive Partikel enthalten und ist daher gesondert zu entsorgen. Der Rest des dekontaminierten Gebäudes kann wie jedes andere Gebäude abgerissen werden.

Die DE 39 16 186 A1 zeigt eine Vorrichtung zum Abtragen einer Schicht von einer Behälterwand eines Brennelementebeckens. Zum Haltern der Vorrichtung an der Behälterwand weist die Vorrichtung Saugplatten auf. Das Abtragen der Schicht geschieht durch ein als Spachtel oder Fräse ausgebildetes Werkzeug.

Für das Abtragen der Oberflächen von (Beton-)Wänden wurde bislang eine autark arbeitende Vorrichtung entwickelt, die

ähnlich einer Schlagmühle die Oberfläche der Wand zerschlägt und abträgt. Es handelt sich hierbei um ein fernbedienbares Trägersystem, in dem die eigentliche Vorrichtung mit einer rotierenden Walze angeordnet ist. Die Walze weist an ihrem Umfang eine Vielzahl von Schlaglamellen auf. Die Vorrichtung ist unter dem Namen "AMANDA" bekannt.

Während des Betriebs saugt sich die Vorrichtung mit Hilfe von Saugnäpfen oder Saugplatten an der Wand fest. Das Arbeitsgerät kann selbstständig die Raumwände hochklettern und trägt dabei schrittweise die Oberfläche der Wand ab.

Die bekannte Vorrichtung weist den Nachteil auf, dass die Leistungsfähigkeit noch nicht ausreichend ist, um zum Beispiel die Innenwände eines stillgelegten Kernkraftwerks in ausreichend kurzer Zeit zu dekontaminieren. Außerdem sind der Verschleiß der Schlaglamellen, der Energiebedarf der Vorrichtung und die Tiefe des Materialabtrags noch nicht befriedigend.

Aufgabe der Erfindung ist, die bekannte Vorrichtung weiter zu entwickeln, die das Abtragen auch von Betonoberflächen bis zu einer Tiefe von 10 Millimeter in einem Arbeitsgang ermöglicht.

Die Aufgabe wird erfindungsgemäß dadurch gelöst, dass der Schlagwalze in Bearbeitungsrichtung ein zweites rotierendes Werkzeug vorgelagert ist, das mehrere scheibenartig ausgebildete und voneinander beabstandete Sägeblätter umfasst. Die Sägeblätter sind dabei vorzugsweise so ausgebildet, dass sie kein Kühlmittel benötigen.

Das bedeutet, dass die erfindungsgemäße Vorrichtung zwei hintereinander angeordnete, z.B. im Wesentlichen als Trommel oder Walze ausgebildete, rotierende Werkzeuge aufweist. In Bearbeitungsrichtung schneidet das rotierende Werkzeug mittels der Sägeblätter zunächst Rillen (wahlweise mit einer Tiefe von 1 mm bis 10 mm) in die Wand. Anschließend trägt das mit Schlaglamellen ausgebildete rotierende Werkzeug das zwischen den Rillen verbliebene Material (Beton) bis zur gewünschten Tiefe von bis zu 10 mm ab. Die Stege zwischen den Rillen sind weit weniger stabil als die "geschlossene" Oberfläche der Wand vor dem Einbringen der Schlitze, so dass die Schlagwalze rascher, effizienter und mit weniger Verschleiß die Oberfläche bis zur gewünschten Tiefe abträgt. Durch die zwei hintereinander angeordneten, rotierenden Werkzeuge sind im Betrieb geringere Anpresskräfte nötig. Dadurch kann das Gesamtsystem leichter und kleiner dimensioniert werden.

Das Schlitzen und das Abtragen der Oberfläche geschehen in einem Arbeitsgang, so dass sich die Gesamt-Bearbeitungszeit nicht erhöht, sondern sogar verkürzt.

Das Schneiden der Rillen in die Wand stellt einen vorbereitenden Arbeitsgang für das rotierende Werkzeug mit den Schlaglamellen dar. Dadurch wird auch eine deutlich größere Abtragtiefe ermöglicht. Die Tiefe der Rillen in der Wand gibt im Wesentlichen die Dicke der Schicht an, die von der Wand abgetragen wird. Dies ist auch bei sehr hartem Material der Wand, wie z.B. Beton, möglich.

Die Vorrichtung bzw. die Bearbeitungseinrichtung bearbeitet dabei die Wand vollkommen autark und ist fernbedienbar. Dabei bearbeitet die Vorrichtung vorzugsweise zunächst eine Bahn auf der Wand in einer (vertikalen) Richtung. Anschließend wird ein Trägersystem, auf dem die Bearbeitungseinrichtung angeordnet ist, um die Breite der zuvor bearbeitenden Bahn parallel zur Wand verschoben und die nächste Bahn wird bearbeitet.

Es ist auch möglich, dass die Bearbeitungseinrichtung innerhalb des Trägersystems horizontal verschiebbar ist. Damit kann erreicht werden, dass mindestens zwei Bahnen auf der Wand bearbeitet werden können, ohne das Trägersystem zu versetzen.

Während des Arbeitsprozesses wird das abgetragene Material sofort gesammelt bzw. abgesaugt, so dass kein kontaminiertes Material unkontrolliert aus der Bearbeitungseinrichtung austritt. Anschließend wird das abgetragene Material vorschriftsmäßig entsorgt.

Auch eine elektronische Sicherheitsabschaltung kann vorgesehen sein, die in einem Gefahrenfall die Vorrichtung in eine Grundposition bringt und abschaltet. Die Sicherheitsabschaltung kann dazu Kontaktleisten und/oder Unterdrucksensoren umfassen.

In einer bevorzugten Ausführungsform ist vorgesehen, dass die Sägeblätter mit harten Schneidstoffen, wie zum Beispiel, Diamant, DLC (=Diamond Like Carbon) oder ähnlichem beschichtet sind. Dadurch wird die Standzeit der Sägeblätter erhöht und der Energiebedarf für das Schlitzen der Wand verringert.

Ein Anpressdruck der Walze mit den Sägeblättern von ca. 800 N kann dabei ausreichend sein. In Versuchen ist ermittelt worden, dass das rotierende Werkzeug mit den Sägeblättern bei einer Drehzahl von ca. 2400 U/min in der Bearbeitungseinrichtung gute Ergebnisse liefert.

In Versuchen konnten mit einem Satz Diamantsägeblätter ca. 500 m Rillen in eine Beton-Wand geschnitten/gesägt werden.

Ferner ist in einer Ausführungsform vorgesehen, dass eine Drehachse des ersten rotierenden Werkzeugs (mit Schlaglamellen) und eine Drehachse des zweiten rotierenden Werkzeugs (mit Sägeblätter) parallel zueinander angeordnet sind. In Versuchen wurde ermittelt, dass bei einer solchen Anordnung der Drehachsen mit einem Satz Schlaglamellen über ca. 400 m Beton abgetragen werden kann.

Wenn die Drehachsen der Walzen parallel zueinander verlaufen, ist die Bearbeitungseinrichtung besonders kompakt.

Die Bearbeitungseinrichtung kann mit Hilfe von Rollen während dem Abtragen von kontaminiertem Material an der Wand entlanggeführt werden.

Vorzugsweise weisen das erste und das zweite Werkzeug jeweils einen eigenen Antrieb auf. Das kann zum Beispiel ein Hydro-motor oder ein Elektromotor sein.

Es kann vorgesehen sein, dass die Drehzahl der beiden rotierenden Werkzeuge unterschiedlich ist. So ist es möglich, das zweite rotierende Werkzeug mit den Sägeblättern schneller zu drehen als das erste rotierende Werkzeug mit den Schlaglamellen.

In einer alternativen Ausführungsform ist vorgesehen, dass die Drehachse des ersten rotierenden Werkzeugs und die Drehachse des zweiten rotierenden Werkzeugs in einem Winkel ungleich 0° (bevorzugt größer 30° und besonders bevorzugt größer 60°) zueinander ausgerichtet sind. Dies hat den Vorteil, dass die Schlaglamellen von der Seite auf dem zwischen den Rillen verbliebenen, abzutragenden Material auftreffen, so dass die Stege teilweise abbrechen und weniger intensiv zermahlen bzw. abgeklopft werden müssen. Dadurch müssen weniger Energie und Kraft aufgewandt werden, was die Lebensdauer der Schlaglamellen verlängert und den Energieverbrauch verringert.

In einer Weiterentwicklung dieser Ausführungsform ist vorgesehen, dass die Drehachse des ersten rotierenden Werkzeugs und die Drehachse des zweiten rotierenden Werkzeugs in einem Winkel von 90° zueinander angeordnet sind. Dazu muss das erste rotierende Werkzeug durch eine gesonderte Vorschubeinrichtung bewegt werden. Bei dieser Ausführungsform schneidet beispielsweise das rotierende Werkzeug mit den Sägeblättern vertikal verlaufende Rillen in die Wand.

Anschließend fährt die Schlagwalze in horizontaler Richtung über das zwischen den Rillen stehen gebliebene Material. Hierbei ist die Kraftersparnis für das erste rotierende Werkzeug am größten und die Lebensdauer der Schlaglamellen am höchsten.

Außerdem ist vorgesehen, dass die Bearbeitungseinrichtung in dem Trägersystem höhenverstellbar angeordnet ist und das Trägersystem auf dem Boden fahrbar ist. Zur Höhenverstellbarkeit weist das Trägersystem vorzugsweise mehrere, ineinander bewegbare Systeme zur Höhenverstellbarkeit auf, wobei zumindest eines der Systeme teleskopartig ausgebildete Säulen aufweist, die bevorzugt mittels eines separaten Antriebsmotors vertikal ausfahrbar sind. Dadurch kann die Bearbeitungseinrichtung in dem Trägersystem zum Abtragen der kontaminierten Schicht von der Wand auf eine Höhe von etwas 4,5 Meter vom Boden angehoben werden. Ein zweites System zur Höhenverstellbarkeit kann sich dabei innerhalb der teleskopartig ausgebildeten Säulen zusätzlich bewegen.

Das Trägersystem ist vorzugsweise auf einer Bodenplatte angeordnet, die auf einem Transportwagen steht. Der Transportwagen kann durch einen Akkumulator oder ein Netzkabel mit elektrischer Energie versorgt und ferngesteuert werden.

Vorzugsweise bewegt sich der Transportwagen auf Raupenketten. Dadurch wird die Bodenauflagefläche vergrößert, um einerseits die Traktion auf unebenem Untergrund zu verbessern und andererseits das Gewicht gleichmäßig zu verteilen. Solche Transportwagen sind bspw. zum Transport von Pianos oder Flügeln bekannt. Sie können sogar Treppen steigen und gewährleisten dabei jederzeit eine horizontal ausgerichtete Transportfläche.

Weiter ist vorgesehen, dass die Antriebsmotoren für die beiden rotierenden Werkzeuge jeweils einen Hydraulikantrieb umfassen, wobei je eine Hydraulikpumpe für den Hydraulikantrieb vorzugsweise außerhalb des Trägersystems angeordnet ist. Durch die Anordnung der Hydraulikpumpe außerhalb des Trägersystems wird Gewicht der Bearbeitungseinrichtung reduziert.

Beim Hydraulikantrieb wird hydraulische Energie (Druck * Volumen) in mechanische Arbeit umgewandelt. Solche Antriebe sind seit langem bekannt, sehr zuverlässig und lassen sich gut steuern und regeln.

Ferner ist vorgesehen, dass mehrere Saugplatten (z.B. acht Saugplatten) zum Beispiel mit Hilfe von pneumatisch oder elektrisch angetriebenen (Arbeits-)Zylindern an die Wand fahrbar sind, wobei eine Vakuumeinrichtung einen Unterdruck unter den Saugplatten erzeugt. Die Vakuumeinrichtung kann dazu bspw. eine Venturidüse aufweisen. Mit Hilfe einer solchen Vakuumeinrichtung kann eine Anpresskraft der Saugplatten an der Wand von ca. 1700 N erzeugt werden. Ausschließlich damit wird das Trägersystem während der Bearbeitung an der Wand fixiert; es sind keine weiteren Einrichtungen nötig, um die Kräfte beim Abtragen des kontaminierten Belags von der Wand aufzunehmen. Dies führt zu einer wesentlichen Zeit-, Aufwands- und Kostenersparnis.

Weitere Vorteile ergeben sich aus der nachfolgenden Beschreibung und den beigefügten Figuren. Es zeigen, jeweils in schematischer Form:
Figur 1 eine Blockdarstellung einer erfindungsgemäßen Vorrichtung zum Abtragen von kontaminiertem Material von einer Wand;
Figur 2 ein Trägersystem zur Aufnahme einer Bearbeitungseinrichtung der erfindungsgemäßen Vorrichtung in einer perspektivischen Ansicht;
Figur 3 das Trägersystem von Figur 2 mit eingesetzter Bearbeitungseinrichtung;
Figur 4 das Trägersystem von Figur 2 oder 3 in einer Frontansicht;
Figur 5 eine Bearbeitungseinrichtung der erfindungsgemäßen Vorrichtung in einer ersten Ausführungsform;
Figur 6 die Bearbeitungseinrichtung aus Figur 5 in drei unterschiedlichen Ansichten;
Figur 7 ein Bereich des Trägersystems mit der Bearbeitungseinrichtung aus den Figuren 5 und 6 in einer Seitenansicht;
Figur 8 das komplette Trägersystem in einer Seitenansicht;
Figur 9 eine Bearbeitungseinrichtung der erfindungsgemäßen Vorrichtung in einer zweiten Ausführungsform;
Figur 10 eine Bearbeitungseinrichtung der erfindungsgemäßen Vorrichtung in einer dritten Ausführungsform;
Figur 11 eine Bearbeitungseinrichtung der erfindungsgemäßen Vorrichtung in einer vierten Ausführungsform;
Figur 12 eine zusätzliche Variante der vierten Ausführungsform von Figur 11; und
Figur 13 eine Weiterbildung der Bearbeitungseinrichtung aus den Figuren 5 bis 7.

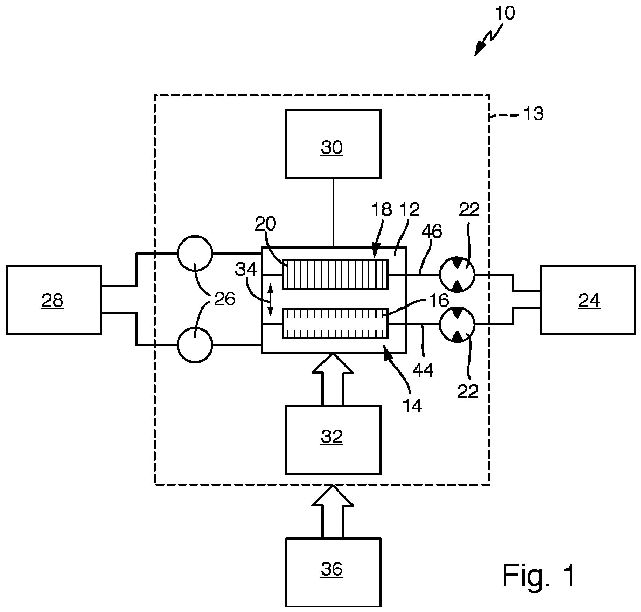

Figur 1 zeigt eine erfindungsgemäße Vorrichtung 10 zum Abtragen von kontaminiertem Material von einer Wand in einer schematischen Blockdarstellung. Das abzutragende kontaminierte Material ist vorzugsweise Beton oder ein anderer harter und/oder spröder Baustoff.

Die Vorrichtung 10 umfasst eine Bearbeitungseinrichtung 12, welche in einem Trägersystem 13 angeordnet ist, das durch einen Transportwagen (nicht dargestellt) auf dem Boden fahrbar ist. Das Trägersystem 13 ist zum Beispiel ein Metallgestell, in dem die wichtigsten Komponenten der Vorrichtung 10 angeordnet und entlang einer oder mehrere Achsen bewegbar oder verschiebbar sind.

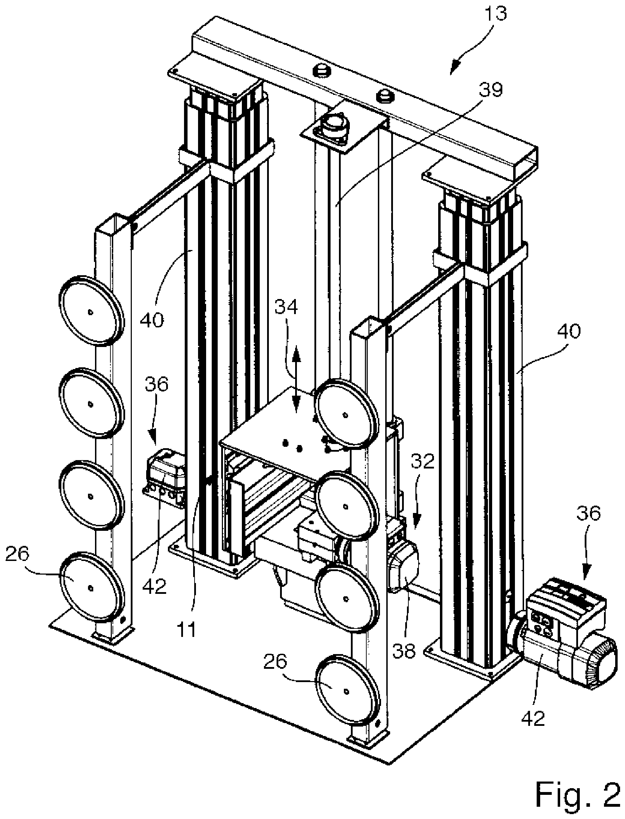

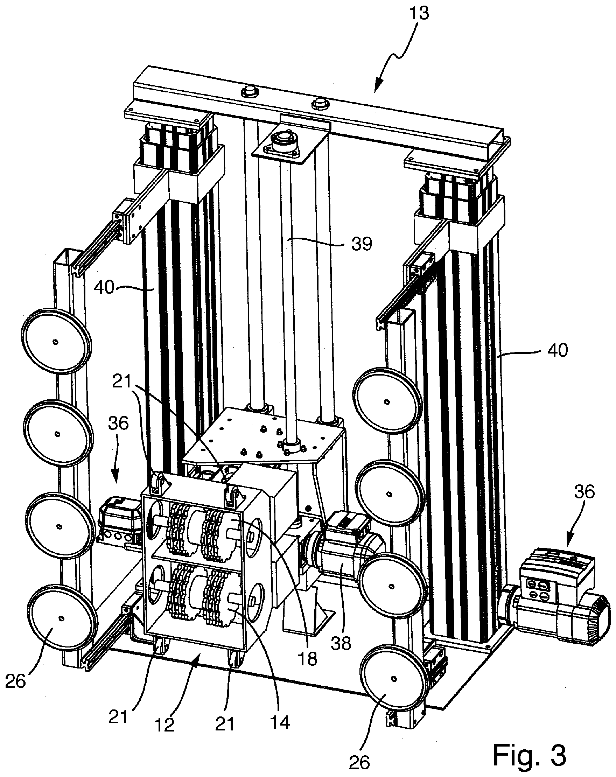

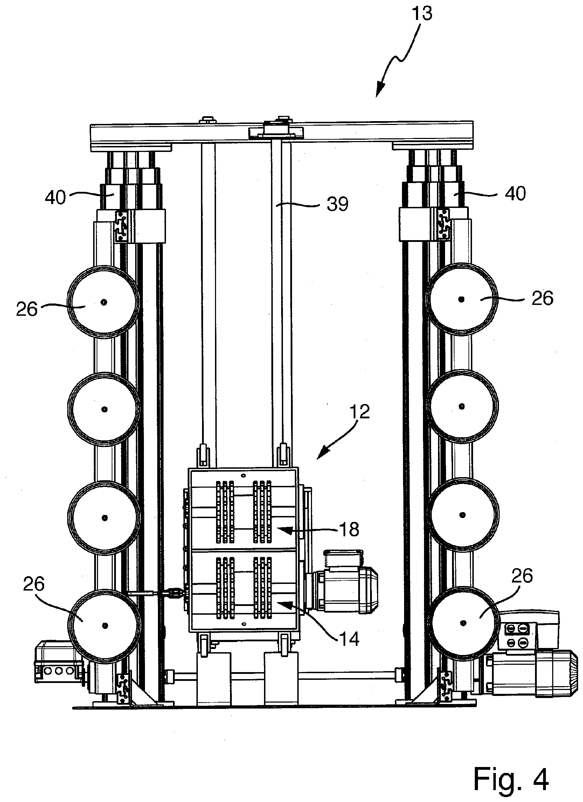

Die Figuren 2 und 3 zeigen eine perspektivische Ansicht des Trägersystems 13, wobei die Bearbeitungseinrichtung 12 in der Figur 2 nicht dargestellt ist, sondern lediglich eine Aufnahme 11 für die Bearbeitungseinrichtung 12. Figur 3 zeigt das komplette Trägersystem 13. Figur 4 zeigt das Trägersystem 13 in einer Frontansicht.

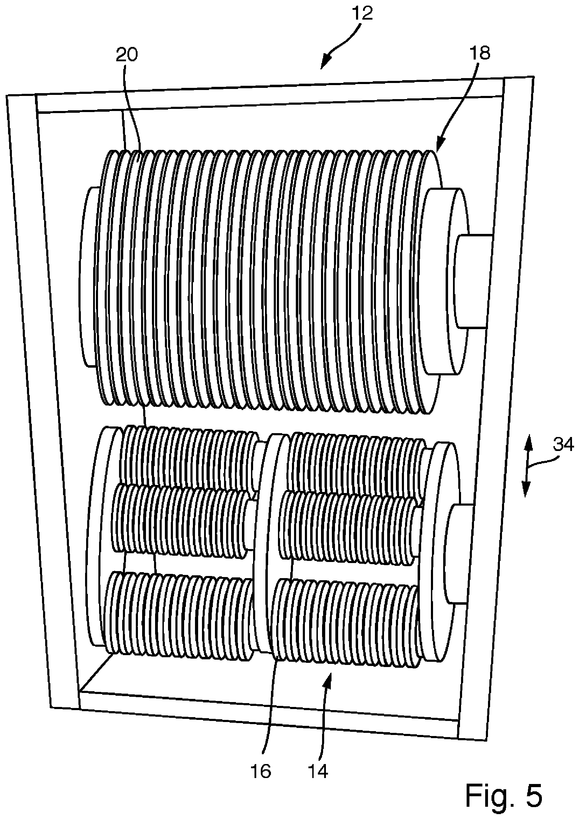

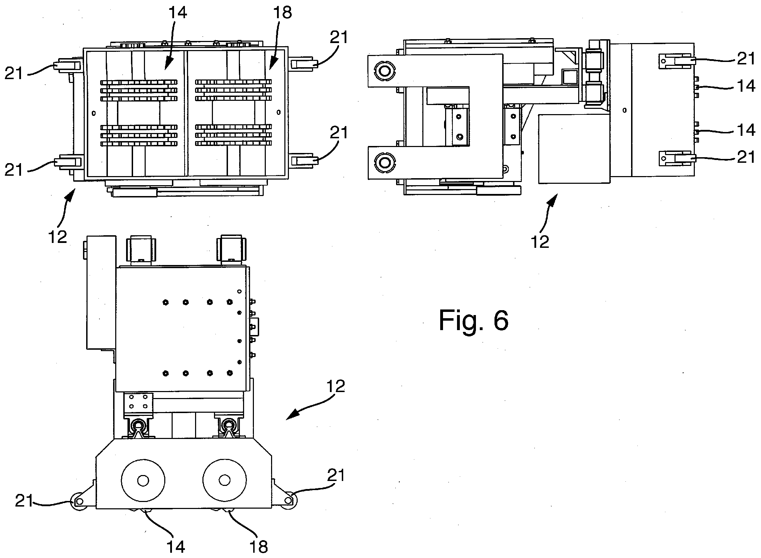

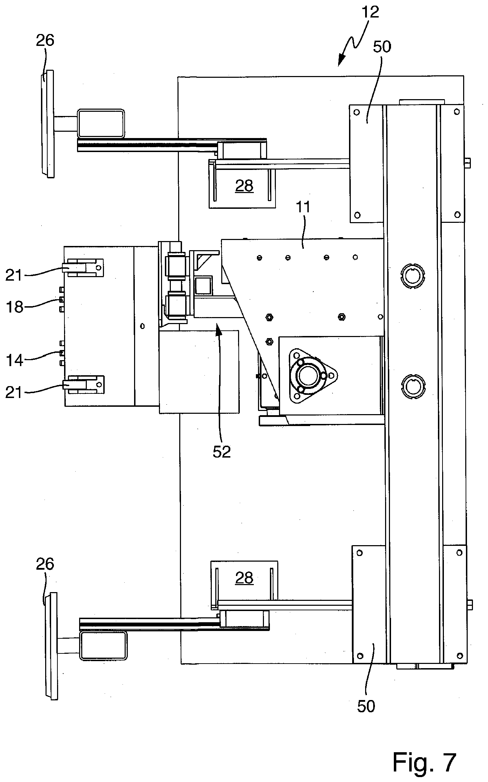

Die Bearbeitungseinrichtung 12 ist in Figur 5 perspektivisch dargestellt und umfasst ein rotierendes Werkzeug 14, das an seinem Umfang Schlaglamellen 16 aufweist (siehe z.B. Figuren 1 und 5). Das erste rotierende Werkzeug 14 arbeitet vorzugsweise als Schlagwalze. Die Figur 6 zeigt darüber hinaus die Bearbeitungseinrichtung 12 in unterschiedlichen Ansichten und Figur 7 zeigt ein Bereich des Trägersystems mit der Bearbeitungseinrichtung 12 in einer Seitenansicht.

Ferner umfasst die Bearbeitungseinrichtung 12 ein zweites rotierendes Werkzeug 18, das scheibenartig ausgebildete und voneinander beabstandete Sägeblätter 20, ähnlich einer Kreissäge, aufweist.

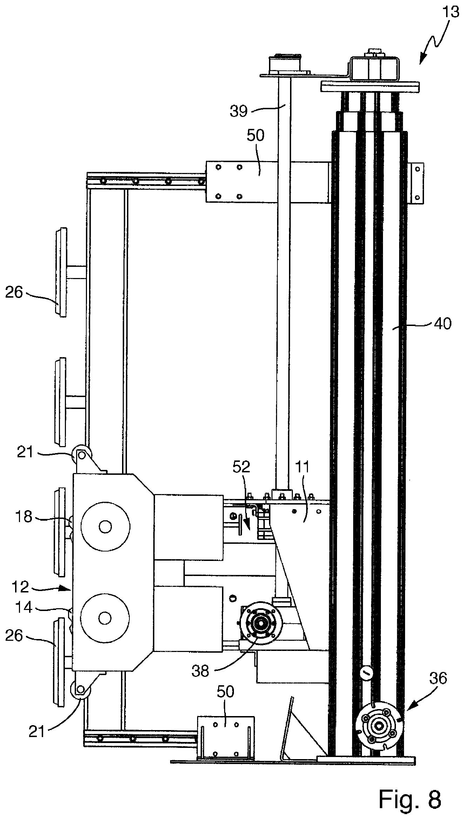

Die Bearbeitungseinrichtung 12 kann mit Hilfe von Rollen 21 während des Abtragens von kontaminiertem Material an der Wand entlanggeführt werden (vgl. Figuren 6, 7 oder 8).

Beide Werkzeuge 14, 18 werden vorzugsweise jeweils von einem separaten Hydraulikmotor 22 angetrieben. Eine zum Betrieb der Hydraulikmotoren 22 nötige Hydraulikpumpe 24 ist vorzugsweise außerhalb des Trägersystems 13 angeordnet.

Das Trägersystem 13 kann mittels mehrerer Saugplatten 26 (z.B. acht Saugplatten 26) an der Wand fixiert werden. Die Saugplatten 26 können automatisch mittels elektrischer, pneumatischer oder hydraulischer Arbeits-Zylinder 50 an die zu bearbeitende Wand gefahren werden. Zwischen der Wand und den Saugplatten 26 wird durch eine Vakuumeinrichtung 28 ein Unterdruck erzeugt, so dass eine Anpresskraft der Saugplatten 26 an der Wand von ca. 1700 N erzeugt werden kann. Die Vakuumeinrichtung 28 ist vorzugsweise auch außerhalb des Trägersystems 13 angeordnet.

Zum Entfernen des von der Wand abgetragenen Materials ist die Bearbeitungseinrichtung 12 in einem Gehäuse untergebracht, und an eine Absaug- und Sammelvorrichtung 30 angeschlossen. Das Gehäuse kann durch Bürsten-Dichtungen oder andere Dichtungen verschlossen sein. Damit wird gewährleistet, dass im Wesentlichen kein abgetragenes Material, auch nicht kontaminierter Staub, aus dem Bereich der Bearbeitungseinrichtung 12 austritt. Das abgetragene Material der Absaug- und Sammelvorrichtung 30 wird anschließend gemäß der gesetzlich vorgeschriebenen Regelungen behandelt und/oder entsorgt.

Die Vorrichtung 10 arbeitet vollkommen autark und wird ferngesteuert. Um an den Wänden systematisch Material abzutragen, umfasst die Vorrichtung 10 zwei Betätigungseinrichtungen 32, 36. Eine erste Betätigungseinrichtung 32 verschiebt über einen Antriebsmotor 38 die Bearbeitungseinrichtung 12 vertikal im Trägersystem 13 (siehe Pfeil 34 in Figur 2). Die Bearbeitungseinrichtung 12 bzw. die Aufnahme 11 für die Bearbeitungseinrichtung 12 wird z.B. an einer Führungsschiene 39 geführt. Die Führungsschiene 39 könnte auch als Gewindespindel ausgebildet sein, wobei die Aufnahme 11 dann ein Innengewinde aufweist, in dem die Gewindespindel durch den Antriebsmotor 38 gedreht wird.

Durch eine zweite Betätigungseinrichtung 36 kann das Trägersystem 13 vertikal nach oben verlängert werden. Zu dieser Höhenverstellbarkeit weist das Trägersystem 13 teleskopartig ausgebildete Säulen 40 auf, die z.B. mittels eines separaten Antriebsmotors 42 vertikal ausfahrbar sind (siehe Figur 2).

Die Figuren 5 und 6 zeigen die Bearbeitungseinrichtung 12 im Detail. In Figur 5 ist im unteren Bereich der Bearbeitungseinrichtung 12 das erste rotierende Werkzeug 14 angeordnet, das im Innern in Umfangsrichtung Schlaglamellen 16 aufweist. Das erste rotierende Werkzeug 14 kann als Trommel oder Walze ausgebildet sein. Die Schlaglamellen 16 sind in Umfangsrichtung beabstandet in dem rotierenden Werkzeug 14 angeordnet und sind vorzugsweise aus gehärtetem Metall oder Hartmetall hergestellt. Im Betrieb kann mit einem Satz Schlaglamellen 16 über etwa 400 m eine Betonschicht mit einer Dicke von etwa 10 mm abgetragen werden.

Im oberen Bereich der Bearbeitungseinrichtung 12 ist das zweite rotierende Werkzeug 18 angeordnet, das die bereits erwähnten voneinander beabstandeten Sägeblätter 20 aufweist. Die Sägeblätter 20 sind vorzugsweise mit Diamant, DLC oder einem anderen sehr harten Schneidstoff bestückt. Im Betrieb kann mit einem Satz Diamant-Sägeblätter 20 über mindestens 500 m Länge Rillen von mindestens 10 Millimeter Tiefe in eine Betonwand gesägt werden.

Die Drehachse 44 des ersten rotierenden Werkzeugs 14 und die Drehachse 46 des zweiten rotierenden Werkzeugs 18 verlaufen in einer ersten Ausführungsform parallel.

Ein beispielhaftes erfindungsgemäßes Verfahren zum Abtragen von kontaminiertem Material von einer Wand verwendet die Vorrichtung 10 und umfasst in der ersten Ausführungsform folgende fernbedienbare Arbeitsschritte:

Anfahren des Trägersystems 13 mittels eines Transportwagens an die Wand, wobei das Trägersystem 13 mit einer Bodenplatte auf dem Transportwagen angeordnet sein kann.

Anlegen der Saugplatten 26 an die Wand durch Betätigen der Arbeitszylinder, die den Saugplatten 26 zugeordnet sind.

Erzeugen von Unterdruck zwischen den Saugplatten 26 und der zu bearbeitenden Wand zum Fixieren des Trägersystems 13 an der Wand durch Betätigen der Vakuumeinrichtung 28. Anschließend werden die Bearbeitungswerkzeuge durch Pneumatikzylinder 52 an die Wand gefahren.

Heranfahren der Bearbeitungseinrichtung 12 an die Wand, so dass zunächst das rotierende Werkzeug 18 mit den Sägeblättern 20 und anschließend das rotierende Werkzeug 14 mit den Schlaglamellen 16 die Wand hintereinander bearbeiten können.

Die erfindungsgemäße Arbeitsweise sieht vor, dass zunächst durch das rotierende Werkzeug 18 mit den Sägeblättern 20 Rillen in den Beton gesägt werden. Anschließend trägt das mit Schlaglamellen 16 ausgebildete rotierende Werkzeug 14 die zwischen den Rillen verbleibenden Stege ab. Dies passiert in einem einzigen Arbeitsgang. Die Tiefe der eingesägten Rillen bestimmt dabei im Wesentlichen die Dicke der abgetragenen Schicht von der Wand. Wenn die Bearbeitungseinrichtung am Ende Ihres Verfahrwegs innerhalb des Trägersystems angelangt ist erfolgt das

Verschieben der Bearbeitungseinrichtung 12 innerhalb des Trägersystems 13 in (vertikaler) Richtung durch die Betätigungseinrichtung 32, so dass eine vertikal verlaufende Bahn auf der Wand bearbeitet wird.

Verlängern des Trägersystems 13 durch vertikales Ausfahren der teleskopartig ausgebildeten Säulen 40. Dabei wird der Antriebsmotor 38 betätigt.

Ist eine max. Höhe erreicht werden das Trägersystem 13 und die Bearbeitungseinrichtung 12 auf die ursprüngliche Ausgangsposition heruntergefahren. Nach Erreichen dieser Position werden die Saugplatten 26 von der Wand gelöst, indem der Unterdruck ausgeglichen wird. Anschließend wird das Trägersystem 13 um eine Bahnbreite mittels des Transportwagens horizontal verschoben.

Die Arbeitsschritte b) bis g) werden wiederholt.

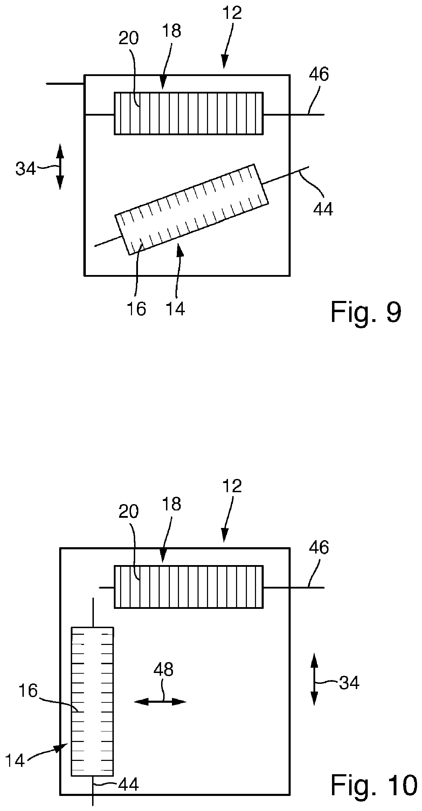

Figur 9 zeigt eine schematische Darstellung der Bearbeitungseinrichtung 12 in einer zweiten Ausführungsform der Vorrichtung 10. In der zweiten Ausführungsform verlaufen die Drehachsen 44 und 46 der beiden rotierenden Werkzeuge 14, 18 in einem Winkel von 0°, bspw. in einem Winkel von 35°. Die Arbeitsweise im Verfahren ist identisch zur oben beschriebenen ersten Ausführungsform. Diese zweite Ausführungsform hat den Vorteil, dass die Schlaglamellen 16 von der Seite, also schräg, an dem zwischen den Rillen verbleibenden, abzutragenden Material angreifen können. Dabei muss weniger Kraft aufgewandt werden; die Lebensdauer der Schlaglamellen 16 kann damit verlängert werden.

Figur 10 zeigt eine schematische Darstellung der Bearbeitungseinrichtung 12 in einer dritten Ausführungsform der Vorrichtung 10. In der dritten Ausführungsform verlaufen die Drehachsen 44 und 46 der beiden rotierenden Werkzeuge 14, 18 in einem Winkel von 90°. Die Arbeitsweise im Verfahren ist in der dritten Ausführungsform etwas anders.

Der Verfahrensschritt d) verändert sich in der Weise, dass zwar zunächst - wie bekannt - durch das rotierende Werkzeug 18 mit den Sägeblättern 20 Rillen in den Beton gesägt werden. Anschließend trägt das mit Schlaglamellen 16 ausgebildete rotierende Werkzeug 14 die zwischen den Rillen verbleibende Schicht in der Weise ab, dass das rotierende Werkzeug in rechtwinklig über die Rillen bewegt wird (siehe Pfeil 48 in Figur 10).

Dazu ist eine in Figur 10 nicht dargestellte zusätzliche Verschiebeeinrichtung nötig. Auch dies passiert sequentiell in einem einzigen Arbeitsgang, wobei die vertikale Bearbeitung einer Bahn auf der Wand sukzessive durchgeführt wird. Das heißt, es werden zunächst nur in einem Teilbereich der Wand durch das rotierende Werkzeug 18 Rillen gesägt, wobei der Teilbereich die Länge des rotierenden Werkzeugs 14 umfasst. Dann verharrt die Bearbeitungseinrichtung 12 bis das rotierende Werkzeug 14 die zwischen den Rillen verbleibende Schicht abgetragen hat. Anschließend wird die Bearbeitungseinrichtung 12 vertikal weiter bewegt (siehe Pfeil 34 in Figur 10). In der dritten Ausführungsform ist die Kraftersparnis für das erste rotierende Werkzeug 14 am größten und die Lebensdauer der Schlaglamellen 16 am längsten.

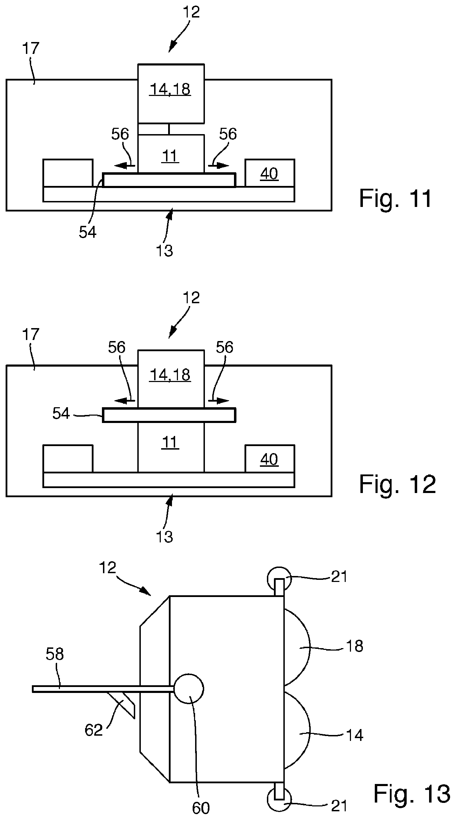

Die Figuren 11 und 12 zeigen eine schematische Darstellung der Bearbeitungseinrichtung 12 in einer vierten Ausführungsform der Vorrichtung 10. Die Figuren 11 und 12 zeigen die Bearbeitungseinrichtung 12 in einer Draufsicht. Die Bearbeitungseinrichtung 12 ist in zwei Blöcken dargestellt:

Der erste Block stellt die beiden rotierenden Werkzeuge 14 und 18 dar, der zweite Block stellt die Aufnahme 11 für die beiden rotierenden Werkzeuge 14 und 18 dar. In der vierten Ausführungsform ist die Bearbeitungseinrichtung 12 auf einer horizontal verschiebbaren Einrichtung 54 angeordnet. Die Bewegungsrichtung der horizontal verschiebbaren Einrichtung 54 ist durch Pfeile 56 gekennzeichnet. Die horizontal verschiebbaren Einrichtung 54 kann dabei direkt mit dem Trägersystem 13 verbunden sein (siehe Figur 11) oder sie kann zwischen den rotierenden Werkzeugen 14 und 18 und der Aufnahme 11 angeordnet sein (siehe Figur 12), so dass lediglich die rotierenden Werkzeuge 14 und 18 horizontal verschoben werden. Diese Ausführungsform weist den Vorteil auf, dass mindestens zwei Bahnen auf der Wand bearbeitet werden können, ohne das Trägersystem 13 versetzen zu müssen.

Figur 13 zeigt eine Weiterbildung der bisher dargestellten Bearbeitungseinrichtung 12. Dabei weist eine Führungsstange 58 ein Gelenk 60 auf, durch das die Bearbeitungseinrichtung 12 immer parallel zur Wand geführt werden kann. Die Rollen 21 wirken als Abstandhalter der Bearbeitungseinrichtung 12 zur Wand. Unebenheiten auf der Wand können so ausgeglichen werden. Die Führungsstange 58 weist darüber hinaus eine Sicherung 62 auf, die verhindert, dass die Bearbeitungseinrichtung 12 beim Anfahren an die Wand bzw. beim Abfahren von der Wand kippt.

## Patentansprüche

1. Vorrichtung (10) zum Abtragen von kontaminiertem Material von einer Wand, die Vorrichtung (10) umfassend
- Saugplatten (26), die mittels Unterdruck ein Trägersystem (13) der Vorrichtung (10) an der Wand fixieren, und
- ein rotierendes Werkzeug (14), das in Umfangsrichtung Schlaglamellen (16) aufweist,
**dadurch gekennzeichnet, dass** in einem in Bearbeitungsrichtung dem rotierenden Werkzeug (14) vorgelagerten zweiten rotierenden Werkzeug (18) scheibenartig ausgebildete und voneinander beabstandete Sägeblätter (20) angeordnet sind.

2. Vorrichtung (10) nach Anspruch 1, **dadurch gekennzeichnet, dass** die Sägeblätter (20) Diamantscheiben umfassen.

3. Vorrichtung (10) nach Anspruch 1 oder 2, **dadurch gekennzeichnet, dass** eine Drehachse (44) des ersten rotierenden Werkzeugs (14) und eine Drehachse (46) des zweiten rotierenden Werkzeugs (18) parallel zueinander und hintereinander in einer Bearbeitungseinrichtung (12) angeordnet sind.

4. Vorrichtung (10) nach Anspruch 1 oder 2, **dadurch gekennzeichnet, dass** die Drehachse (44) des ersten rotierenden Werkzeugs (14) und die Drehachse (46) des zweiten rotierenden Werkzeugs (18) in einem Winkel größer 0° zueinander angeordnet sind.

5. Vorrichtung (10) nach Anspruch 4, **dadurch gekennzeichnet, dass** die Drehachse (44) des ersten rotierenden Werkzeugs (14) und die Drehachse (46) des zweiten rotierenden Werkzeugs (18) in einem Winkel von 90° zueinander ausgerichtet sind.

6. Vorrichtung (10) nach einem der vorhergehenden Ansprüche, **dadurch gekennzeichnet, dass** die Vorrichtung (10) in dem Trägersystem (13) höhenverstellbar angeordnet ist und das dem Trägersystem (13) mittels eines Transportwagens auf dem Boden fahrbar ist.

7. Vorrichtung (10) nach Anspruch 6, **dadurch gekennzeichnet, dass** das Trägersystem (13) teleskopartig ausgebildete Säulen (40) aufweist, die vertikal ausfahrbar sind.

8. Vorrichtung (10) nach einem der vorhergehenden Ansprüche, **dadurch gekennzeichnet, dass** die Antriebsmotoren (22) für die beiden rotierenden Werkzeuge (14, 18) jeweils einen Hydraulikantrieb umfassen, wobei je eine Hydraulikpumpe (24) für den Hydraulikantrieb außerhalb der Bearbeitungseinrichtung (12) angeordnet ist.

9. Vorrichtung (10) nach Anspruch 8, **dadurch gekennzeichnet, dass** die Drehzahl der beiden rotierenden Werkzeuge (14, 18) unterschiedlich ist.

10. Vorrichtung (10) nach einem der vorhergehenden Ansprüche, **dadurch gekennzeichnet, dass** die Saugplatten (26) automatisch mittels Arbeitszylinder an die Wand fahrbar sind, wobei eine Vakuumeinrichtung (28) einen Unterdruck an den Saugplatten (26) erzeugt.

11. Verfahren zum Abtragen von kontaminiertem Material von einer Wand,
**dadurch gekennzeichnet, dass** in dem Verfahren eine Vorrichtung (10) gemäß der Ansprüche 1 bis 10 verwendet wird und das Verfahren folgende fernbedienbare Arbeitsschritte umfasst:
a) Anfahren eines Trägersystems (13) mittels eines Transportwagens an eine Wand, wobei in dem Trägersystem (13) eine Bearbeitungseinrichtung (12) zum Abtragen von kontaminiertem Material von der Wand angeordnet ist;
b) Anlegen von Saugplatten (26) an die Wand durch Betätigen von Arbeitszylinder, die den Saugplatten (26) zugeordnet sind;
c) Erzeugen von Unterdruck unter den Saugplatten (26) und damit Fixieren des Trägersystems (13) an der Wand durch Betätigen einer Vakuumeinrichtung (28);
d) Heranfahren einer Bearbeitungseinrichtung (12) an die Wand, so dass zunächst ein in der Bearbeitungseinrichtung (12) angeordnetes rotierendes Werkzeug (18) mit Sägeblättern (20) und anschließend ein in der Bearbeitungseinrichtung (12) angeordnetes rotierendes Werkzeug (14) mit Schlaglamellen (16) die Wand hintereinander bearbeiten können;
e) Verschieben der Bearbeitungseinrichtung innerhalb des Trägersystems in vertikaler Richtung, so dass eine vertikal verlaufende Bahn auf der Wand bearbeitet wird;
f) Verlängern des Trägersystems (13) durch vertikales Ausfahren von teleskopartig ausgebildeten Säulen (40);
g) ist eine max. Höhe erreicht, Herunterfahren des Trägersystems (13), Abschalten und Einfahren der Bearbeitungseinrichtung (12) in eine Ausgangsposition, Lösen der Saugplatten (26) von der Wand und horizontales Verschieben des Trägersystems (13) um eine Bahnbreite mittels des Transportwagens;
h) Wiederholen der Arbeitsschritte b) bis g).

## Claims

1. Device (10) for removing contaminated materials from a wall, the device (10) comprising
- suction plates (26) which fix a support system (13) of the device (10) to the wall by means of a negative pressure, and
- a rotating tool (14) which has impact cutters (16) in the circumferential direction,
**characterised in that** disc-like saw blades spaced from one another (20) are arranged in a second rotating tool (18) upstream of the rotating tool (14) in the working direction.

2. Device (10) according to claim 1, **characterised in that** the saw blades (20) comprise diamond discs.

3. Device (10) according to claim 1 or 2, **characterised in that** an axis of rotation (44) of the first rotating tool (14) and an axis of rotation (46) of the second rotating tool (18) are arranged parallel to each other and behind each other in a processing device (12).

4. Device (10) according to claim 1 or 2, **characterised in that** the axis of rotation (44) of the first rotating tool (14) and the axis of rotation (46) of the second rotating tool (18) are arranged at an angle greater than 0° to each other.

5. Device (10) according to claim 4, **characterised in that** the axis of rotation (44) of the first rotating tool (14) and the axis of rotation (46) of the second rotating tool (18) are aligned at an angle of 90° to each other.

6. Device (10) according to one of the preceding claims, **characterised in that** the device (10) can be arranged in the support system (13) in a height-adjustable manner and that the support system (13) can be moved on the floor by way of a dolly.

7. Device (10) according to claim 6, **characterised in that** the support system (13) has telescopically designed columns (40) which can be extended in a vertical manner.

8. Device (10) according to one of the preceding claims, **characterised in that** the drive motors (22) for both rotating tools (14, 18) each comprise a hydraulic drive, whereby a hydraulic pump (24) for the hydraulic drive is arranged outside of the processing device (12).

9. Device (10) according to claim 8, **characterised in that** the speed of both rotating tools (14, 18) is different.

10. Device (10) according to one of the preceding claims, **characterised in that** the suction plates (26) can be automatically moved onto the wall by way of working cylinders, whereby a vacuum device (28) generates a negative pressure on the suction plates (26).

11. Method for removing contaminated materials from a wall, **characterised in that** a device (10) in accordance with claims 1 to 10 is used in the method and the method contains the following remote-controlled working steps:
a) Movement of a support system (13) onto a wall using a dolly, whereby a processing device (12) to remove contaminated materials from the wall is arranged in the support system (13);
b) Application of suction plates (26) to the wall by pressing the working cylinders assigned to the suction plates (26);
c) Generation of negative pressure beneath the suction plates (26) and thus fixing of the support system (13) to the wall by pressing of a vacuum device (28);
d) Approaching of processing device (12) to the wall so that a rotating tool (18) with saw blades (20) arranged in the processing device (12) and then a rotating tool (14) with impact cutters (16) arranged in the processing device (12) can process the wall in succession;
e) Movement of the processing device within the support system in a vertical direction so that a vertically running web is processed on the wall;
f) Extension of the support system (13) by vertically extending the telescopically designed columns (40);
g) If the max. height is reached, the support system (13) is shut down, the processing device (12) is deactivated and returned to the original starting position, the suction plates (26) are removed from the wall and the support system (13) is then moved horizontally by a web width through use of the dolly;
h) Repetition of working steps b) to g).

## Revendications

1. Dispositif (10) pour enlever un matériau contaminé d'une paroi, le dispositif (10) comprenant
- des plaques d'aspiration (26) qui fixent un système de support (13) du dispositif (10) sur la paroi au moyen d'une pression négative, et
- un premier outil rotatif (14) présentant des lamelles de percussion (16) dans la direction circonférentielle,
**caractérisé en ce que** des lames de scie (20) en forme de disque sont agencées dans un second outil rotatif (18) en amont du premier outil rotatif (14) dans la direction de traitement, et espacées les unes des autres.

2. Dispositif (10) selon la revendication 1, **caractérisé en ce que** les lames de scie (20) comprennent des disques diamantés.

3. Dispositif (10) selon la revendication 1 ou 2, **caractérisé en ce qu'**un axe de rotation (44) du premier outil rotatif (14) et un axe de rotation (46) du second outil rotatif (18) sont agencés parallèles entre eux et l'un derrière l'autre dans un dispositif de traitement (12).

4. Dispositif (10) selon la revendication 1 ou 2, **caractérisé en ce que** l'axe de rotation (44) du premier outil rotatif (14) et l'axe de rotation (46) du second outil rotatif (18) sont disposés l'un par rapport à l'autre selon un angle supérieur à 0°.

5. Dispositif (10) selon la revendication 4, **caractérisé en ce que** l'axe de rotation (44) du premier outil rotatif (14) et l'axe de rotation (46) du second outil rotatif (18) sont disposés l'un par rapport à l'autre selon un angle de 90°.

6. Dispositif (10) selon l'une quelconque des revendications précédentes, **caractérisé en ce que** le dispositif (10) est agencé réglable verticalement dans le système de support (13), et **en ce que** le système de support (13) peut être déplacé sur le sol au moyen d'un chariot de transport.

7. Dispositif (10) selon la revendication 6, **caractérisé en ce que** le système de support (13) comporte des colonnes (40) formées de manière télescopique, qui sont extensibles verticalement.

8. Dispositif (10) selon l'une des revendications précédentes, **caractérisé en ce que** les moteurs d'entraînement (22) des deux outils rotatifs (14, 18) comprennent chacun un entraînement hydraulique, dans lequel une pompe hydraulique (24) est agencée pour chaque entraînement hydraulique à l'extérieur du dispositif de traitement (12).

9. Dispositif (10) selon la revendication 8, **caractérisé en ce que** la vitesse de rotation des deux outils rotatifs (14, 18) est différente.

10. Dispositif (10) selon l'une des revendications précédentes, **caractérisé en ce que** les ventouses (26) sont déplaçables automatiquement sur la paroi au moyen d'un vérin de travail, dans lequel un dispositif à vide (28) génère une pression négative au niveau des plaques d'aspiration (26).

11. Procédé pour enlever un matériau contaminé d'une paroi, **caractérisé en ce qu'**un dispositif (10) selon les revendications 1 à 10 est utilisé dans le procédé, et **en ce que** le procédé comprend les étapes suivantes pouvant être télécommandées consistant à :
a) déplacer un système de support (13) au moyen d'un chariot de transport vers une paroi, dans lequel un dispositif de traitement (12) pour enlever le matériau contaminé de la paroi est agencé dans le système de support (13) ;
b) appliquer des plaques d'aspiration (26) sur la paroi en actionnant des vérins de travail qui sont associés aux plaques d'aspiration (26) ;
c) générer une pression négative sous les plaques d'aspiration (26) et fixer ainsi le système de support (13) à la paroi en actionnant un dispositif à vide (28) ;
d) approcher un dispositif de traitement (12) au niveau de la paroi, de telle sorte que d'abord un outil rotatif (18) avec des lames de scie (20) agencé dans le dispositif de traitement (12) et ensuite un outil rotatif (14) avec des lamelles de percussion (16) disposé dans le dispositif de traitement (12) peuvent traiter la paroi successivement ;
e) déplacer le dispositif de traitement à l'intérieur du système de support dans la direction verticale, de sorte qu'une voie s'étendant verticalement est traitée sur la paroi ;
f) allonger le système de support (13) par un mouvement vertical de colonnes (40) formées de manière télescopique ;
g) lorsqu'une hauteur maximale est atteinte, arrêter le système de transport (13), arrêter et rétracter le dispositif de traitement (12) dans une position de départ, détacher les plaques d'aspiration (26) de la paroi et déplacer horizontalement le système de support (13) d'une largeur de bande au moyen du chariot de transport ;
h) répéter les étapes b) à g).
